**Europäisches Patentamt**

**European Patent Office**

**Office européen des brevets**

(11) Veröffentlichungsnummer: **0 512 563 A2**

# EUROPÄISCHE PATENTANMELDUNG

(21) Anmeldenummer: **92107808.5**

(22) Anmeldetag: **08.05.92**

(51) Int. Cl.5: **G01C 21/16**

(30) Priorität: **10.05.91 DE 4115330**

(43) Veröffentlichungstag der Anmeldung:
**11.11.92 Patentblatt 92/46**

(84) Benannte Vertragsstaaten:
**DE FR GB**

(71) Anmelder: **TELDIX GmbH**
**Grenzhöfer Weg 36 Postfach 105608**
**W-6900 Heidelberg 1(DE)**

(72) Erfinder: **Woll, Bernhard, Dipl.-Ing.**
**Röntgenstrasse 3**
**W-7525 Bad Schönborn(DE)**

(74) Vertreter: **Wiechmann, Manfred, Dipl.-Ing.**
**ANT Nachrichtentechnik GmbH**
**Patentabteilung Gerberstrasse 33**
**W-7150 Backnang(DE)**

(54) **Navigationsanordnung für Fahrzeuge.**

(57) Eine Navigationsanordnung für Fahrzeuge bestimmt aus den Meßsignalen zweier Beschleunigungsmesser (2, 3) und einem Drehratensensor (4), aus denen die Einflüsse dynamischer Fahrzeugbeschleunigungen eliminiert werden, Lageinformationen für das Fahrzeug (1).

Fig.1

EP 0 512 563 A2

Stand der Technik

Die vorliegende Erfindung betrifft eine Navigationsanordnung für Fahrzeuge, welche aus den Meßsignalen von Beschleunigungsmessern, die die Fahrzeugbeschleunigung in Längs- und Querrichtung ermitteln, den Kippwinkel des Fahrzeugs um dessen Längsachse und den Rollwinkel des Fahrzeugs um dessen Querachse bestimmt, wobei aus den Meßsignalen der Beschleunigungsmesser die durch dynamische Längs- und Querbeschleunigung hervorgerufenen Signalanteile eliminiert werden.

Ein derartige Navigationsanordnung ist aus der DE-OS 27 44 431 bekannt. Die in den Meßsignalen der Beschleunigungsmesser unvermeidlich vorhandenen Signalanteile, welche auf die dynamische Längs- und Querbeschleunigung des Fahrzeugs zurückgehen, führen, wenn sie nicht eliminiert werden, zu einer unkorrekten Lagebestimmung des Fahrzeugs.

Vorteile der Erfindung

Eine Navigationsanordnung mit den Merkmalen des Anspruchs 1 hat den Vorteil, daß sie in der Lage ist, mit einem sehr geringen Aufwand an Meßgeräten - zwei Beschleunigungsmesser und ein Drehratensensor - die dynamischen Längs- und Querbeschleunigungsanteile des Fahrzeugs zu ermitteln und schließlich den Kippwinkel des Fahrzeugs um seine Längsachse, den Rollwinkel um seine Querachse und die Drehrate um seine Querachse fehlerfrei zu bestimmen.

Den Unteransprüchen sind zweckmäßige Ausführungen der Erfindung zu entnehmen.

Figurenbeschreibung

Die Erfindung wird nun anhand eines in der Zeichnung dargestellten Ausführungsbeispiels näher erläutert. Es zeigen:

Fig. 1 Die Lagekoordinaten eines Fahrzeugs,

Fig. 2 eine Schaltungsanordnung zum Bestimmen der dynamischen Längsbeschleunigung eines Fahrzeugs und

Fig. 3 eine Schaltungsanordnung zum Ermitteln des Kippwinkels um die Längsachse, des Rollwinkels um die Querachse und der Drehrate um die Querachse eines Fahrzeugs.

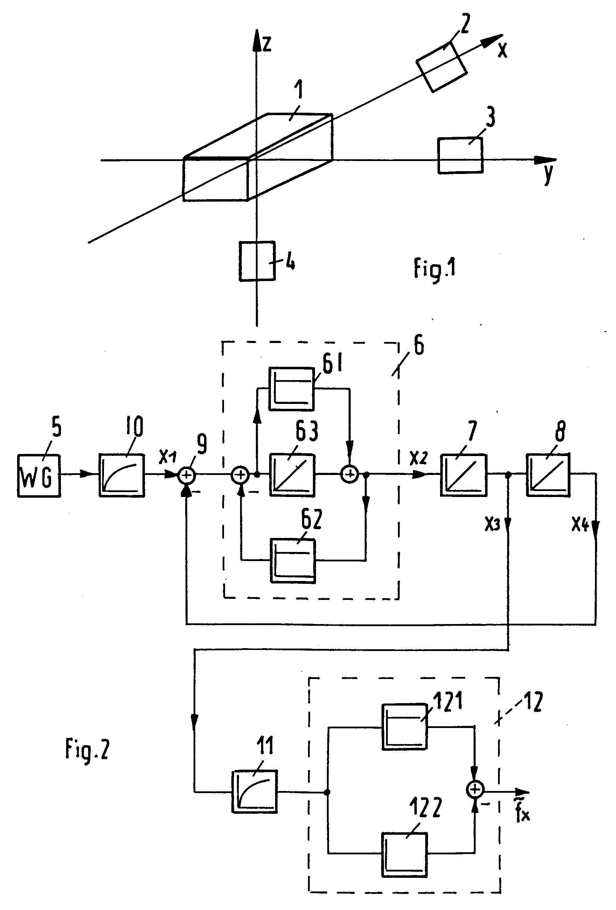

In der Fig. 1 ist sehr schematisch ein Fahrzeug 1 dargestellt mit seinem inertialen Koordinatensystem, wobei die X-Achse die Längsachse, die Y-Achse die Querachse und die Z-Achse die Hochachse des Fahrzeugs 1 bildet. Auf dem Fahrzeug sind ein erster Beschleunigungsmesser 2, der die Fahrzeugbeschleunigung in Längsachsrichtung mißt, ein zweiter Beschleunigungsmesser 3, der die Fahrzeugbeschleunigung in Querachsrichtung mißt, und ein Drehratensensor 4 installiert, mit dem die Drehrate des Fahrzeugs um seine Hochachse (Z-Achse) ermittelt wird. Diese drei Meßgeräte reichen aus, um die erforderlichen Lageinformation des Fahrzeugs, das sind der Kippwinkel $\delta$ um die Fahrzeuglängsachse (X-Achse), der Rollwinkel $\gamma$ um die Fahrzeugquerachse (Y-Achse) und die Drehrate $\omega_y$ um die Fahrzeugquerachse, zu gewinnen.

Wie bereits einleitend ausgeführt, ist es zur Gewinnung unverfälschter Lageinformationen erforderliche, diejenigen Signalanteile in den Meßsignalen der Beschleunigungsmesser 2 und 3, welche auf dynamische Längs- und Querbeschleunigung des Fahrzeugs zurückgehen, zu eliminieren. Die dynamische Beschleunigung in Längsachsrichtung läßt sich mit der in Fig. 2 dargestellten Schaltung ermitteln.

Die Schaltung gemäß 2 weist einen Weggeber 5 auf, der ein über die jeweils zurückgelegte Wegstrecke des Fahrzeugs informierendes Signal abgibt. Dieses Signal XI wird einem Regelkreis zugeführt, welcher aus einer Differenziereinrichtung 6 und zwei daran in Reihe angeschlossenen Integratoren 7 und 8 besteht. Am Ausgang der Differenziereinrichtung 6 erscheint ein Signal X2, das die Beschleunigung des Fahrzeugs in Längsachsrichtung wiedergibt. Als vorteilhafte Differenziereinrichtung 6 erweist sich ein realer PD-Regler, wie er aus dem Buch von O. Föllinger "Regelungstechnik", Jahrgang ?, Verlag ?, [2]S. 26, 27 hervorgeht. Der reale PD-Regler ist mit zwei Proportional-Übertragungsgliedern 63 realisiert. Nach einer Integration des Beschleunigungssignals X2 durch den ersten Integrator 7 entsteht an dessen Ausgang ein die Geschwindigkeit des Fahrzeugs wiedergebendes Signal X3.

Der zweite Integrator 8 erzeugt aus dem Geschwindigkeitssignal X3 ein Weginformationssignal X4. Dieses Signal X4 wird gemeinsam mit dem Ausgangssignal des Weggebers 5 auf einen Summationsknoten 9 vor der Differenziereinrichtung 6 gegeben. Im Summationskonten 9 wird durch Subtraktion die Ablage der Weginformation X4, die aus dem der Fahrzeugbeschleunigung in Längsachsrichtung proportionalen Signal X2 abgeleitet ist, von der Weginformation des Weggebers 5 ermittelt und dieses Ablagesignal der Differenziereinrichtung 6 zugeführt.

Das Ausgangssignal des Weggebers 5 ist eine aus Impulsen gebildete treppenförmige Funktion, wobei jeder Impuls einem vorgegebenen Weginkrement entspricht. Es ist zweckmäßig, das treppenförmige Ausgangssignal mittels eines Tiefpasses 10 zu glätten, bevor es zur Gewinnung des Ablagesignals herangezogen wird.

Im Prinzip steht am Ausgang der Differenziereinrichtung 6 ein der dynamischen Längsbeschleunigung des Fahrzeugs proportionales Signal X2 zur Verfügung. Dieses Signal X2 ist aber durch eine relativ große Störwelligkeit charakterisiert. Um ein möglichst störwellenarmes, der dynamischen Längsbeschleunigung proportionales Signal $\tilde{f}_X$ zu erhalten, wird das der Geschwindigkeit proportionale Signal X3 zunächst zur Glättung über einen Tiefpaß 11 geführt und dann auf einen realen Differenzierer 12, bestehend aus einem Proportional-Übertragungsglied 121 und einem Integrier-Übertragungsglied 122, gegeben. Am Ausgang des realen Differenzierers 12 steht schließlich ein der dynamischen Längsbeschleunigung proportionale Signal $f_X$ zur Verfügung.

Nachdem die dynamische Beschleunigung $f_X$ in Längsschsrichtung ermittelt worden ist, kann die dynamische Beschleunigung $\tilde{f}_Y$ in Querachsrichtung durch folgende Beziehung

$$\tilde{f}_X = \omega_Z \cdot \int f_X \, dt \qquad (1)$$

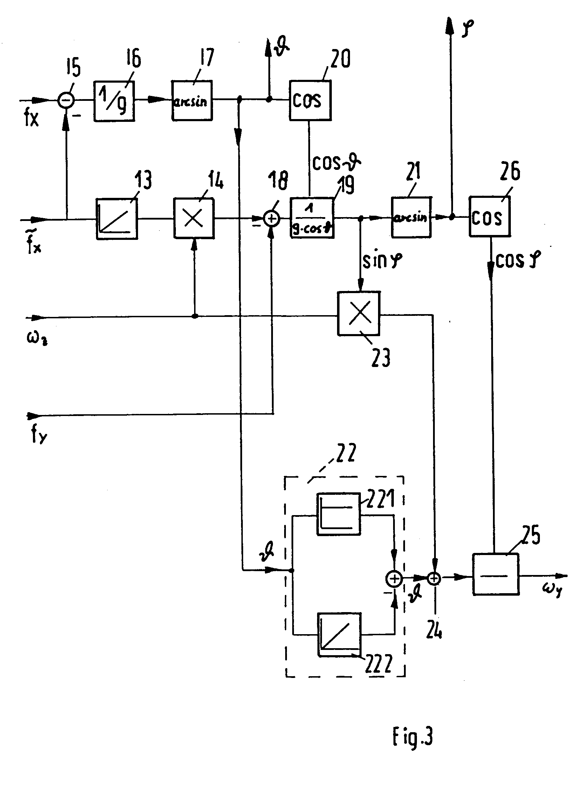

bestimmt werden, wobei $\omega_Z$ die vom Drehratensensor 4 gemessene Drehrate des Fahrzeugs um seine Hochachse (Z-Achse) ist. In der Schaltung gem. Fig. 3 realisiert ein Integrator 13, der das der dynamischen Längsbeschleunigung proportionale Signal $\tilde{f}_X$ integriert, und ein Multiplizierer 14, der aus dem Ausgangssignal des Integrators 13 und der Drehrate $\omega_Z$ um die Fahrzeughochachse ein Produkt bildet, die in (1) angegebene Beziehung.

Die in Fig. 3 gezeigte Schaltung ermittelt den Kippwinkel $\delta$ des Fahrzeugs um dessen Längsachse nach folgender Beziehung:

$$\delta = \arcsin \frac{1}{g} (f_X - \tilde{f}_X) \qquad (2)$$

Dazu bildet ein Summationsknoten 15 die Differenz aus dem die Beschleunigung in Längsrichtung angebenden Meßsignal $f_X$ des ersten Beschleunigungsmessers 2 und aus dem der dynamischen Längsbeschleunigung proportionalen Signal $\tilde{f}_X$.

In einem Schaltblock 16 wird dieses Differenzsignal mit dem Kehrwert der Erdbeschleunigung g bewertet, und ein weiterer Schaltblock 17 bildet die arcsin-Funktion des Ausgangssignals des Schaltblocks 16. Am Ausgang des Schaltblocks 17 steht damit der von der dynamischen Längsbeschleunigung nicht verfälschte Kippwinkel $\delta$ um die Fahrzeuglängsachse zur Verfügung.

Der Rollwinkel $\gamma$ des Fahrzeugs um seine Querachse ist durch die Beziehung

$$\gamma = \arcsin \cdot \frac{1}{g \cos} \cdot (f_Y - \tilde{f}_Y) \qquad (3)$$

gegeben. Die Differenz zwischen dem die Beschleunigung in Querachsrichtung angegebenen Meßsignal $f_Y$ des zweiten Beschleunigungsmessers 3 und dem der dynamischen Querbeschleunigung proportionalen Signal $f_Y$ wird am Summationsknoten 18 gebildet. Diese Differenz eliminiert den zu Fehlinformationen führenden dynamischen Beschleunigungsanteil. Ein Schaltblock 19 bewertet das vom Summationsknoten 18 kommende Differenzsignal mit dem Kehrwert des Produkts aus der Erdbeschleunigung g und dem cos des Kippwinkels $\delta$, welcher im Schaltblock 20 erzeugt wird.

Schließlich ermittelt die Schaltung der Fig. 3 auch noch die Drehrate $\omega_Y$ um die Fahrzeugquerachse nach folgender Beziehung:

$$\omega_Y = \frac{1}{\cos \gamma} \cdot (\dot{\delta} + \omega_Z \cdot \sin\gamma) \tag{4}$$

Dazu wird in einem realen Differenzierer 22, bestehend aus einem Proportional-Übertragungsglied 221 und einem Integrier-Übertragungsglied 222, der Kippwinkel $\delta$ differenziert. Ein Multiplizierer 23 bildet das Produkt aus der gemessenen Drehrate $\omega_Z$ um die Fahrzeughochachse und dem am Ausgang des Schaltblocks 19 zur Verfügung stehenden Signal $\sin\gamma$. Das Produktsignal des Multiplizierers 23 und der differenzierte Kippwinkel $\delta$ werden in einem Summationsknoten 24 additiv überlagert. Ein Schaltblock 25 bewertet das Ausgangssignal des Summationskonten 24 mit dem Kehrwert des $\cos\gamma$- diese Funktion bildet ein Schaltblock 26 -, so daß schließlich am Ausgang des Schaltblocks 25 die von der dynamischen Längs- und Querbeschleunigung des Fahrzeugs nicht beeinflußte Drehrate $\omega_Y$ um die Querachse zur Verfügung steht.

**Patentansprüche**

1. Navigationsanordnung für Fahrzeuge, welche aus den Meßsignalen von Beschleunigungsmessern, die die Fahrzeugbeschleunigung in Längs- und in Querachsrichtung ermitteln, den Kippwinkel des Fahrzeugs um dessen Längsachse und den Rollwinkel des Fahrzeugs um dessen Querachse bestimmt, wobei aus den Meßsignalen der Beschleunigungsmesser die durch dynamische Längs- und Querbeschleunigung hervorgerufenen Signalanteile eliminiert werden, dadurch gekennzeichnet, daß der der dynamischen Längsbeschleunigung proportionale Signalanteil ($\overline{f}_X$) von einer Schaltung ermittelt wird, welche einen Weggeber (5) aufweist, dessen über die jeweils zurückgelegte Strecke des Fahrzeugs (1) informierendes Ausgangssignal einem Regelkreis zugeführt ist, der eine an ihrem Ausgang ein der dynamischen Längsbeschleunigung proportionales Signal (X2) liefernde Differenziereinrichtung (6) und zwei dieser nachgeschaltete Integratoren (7, 8) aufweist, wobei die Differenziereinrichtung (6) ein Eingangssignal erhält, das der Differenz aus dem eine Weginformation wiedergebenden Ausgangssignal (X4) des letzten Integrators (8) und dem Weggebersignal (X1) entspricht, und daß der der dynamischen Querbeschleunigung proportionale Signalanteil ($\overline{f}_Y$) durch Multiplikation des integrierten, der dynamischen Längsbeschleunigung proportionalen Signalanteils ($f_X$) mit der von einem Drehratensensor (4) ermittelten Drehrate ($\omega_Z$) des Fahrzeugs (1) um seine Hochachse (Z) entsteht.

2. Navigationsanordnung nach Anspruch 1, dadurch gekennzeichnet, daß das Weggebersignal vor der Differenzbildung mit dem Integratorausgangssignal (X4) über einen Tiefpaß (10) geführt ist.

3. Navigationsanordnung nach Anspruch 1, dadurch gekennzeichnet, daß die Differenziereinrichtung (6) ein realer PD-Regler (61, 62, 63) ist.

4. Navigationsanordnung nach Anspruch 1, dadurch gekennzeichnet, daß der der dynamischen Längsbeschleunigung proportionale Signalanteil ($\overline{f}_X$) aus dem Ausgangssignal (X3) des ersten der Differenziereinrichtung (6) nachgeschalteten Integrators (7) durch Tiefpaßfilterung (11) und anschließende Differenzierung (12) gewonnen wird.

5. Navigationsanordung nach Anspruch 1, dadurch gekennzeichnet, daß zur Bestimmung des Kippwinkels ($\delta$) des Fahrzeugs (1) um seine Längsachse eine Schaltungsanordnung (15, 16, 17) vorhanden ist, welche die arc sin-Funktion der mit dem Faktor 1/g (g = Erdbeschleunigung) bewerteten Differenz aus dem Meßsignal ($f_X$) des die Fahrzeugbeschleunigung in Längsachsrichtung ermittelnden Beschleunigungsmessers (2) und dem der dynamischen Längsbeschleunigung proportionalen Signalanteil ($f_X$) bildet.

6. Navigationsanordnung nach Anspruch 1, dadurch gekennzeichnet, daß zur Bestimmung des Rollwinkels ($\gamma$) des Fahrzeugs (1) um seine Querachse eine Schaltungsanordnung (13, 14, 18, 19, 20, 21) vorhanden ist, welche die arc sin-Funktion der mit dem Faktor 1/g ( g = Erdbeschleunigung) bewerteten und mit dem Kehrwert des cos des Kippwinkels multiplizierten Differenz aus dem Meßsignal ($f_Y$) des die Fahrzeugbeschleunigung in Querachsrichtung ermittelnden Beschleunigungsmessers (3) und der dynamischen Querbeschleunigung proportionalen Signalanteil ($\overline{f}_Y$) bildet.

**7.** Navigationsanordnung nach Anspruch 1, dadurch gekennzeichnet, daß zur Bestimmung der Drehrate ($\omega_y$) des Fahrzeugs um die Querachse eine Schaltungsanordnung (22, 23, 24, 25, 26) vorhanden ist, welche das Produkt aus dem Kehrwert des cos des Rollwinkels ($\gamma$) und der Summe aus dem differenzierten Kippwinkels ($\delta$) und dem mit der Drehrate ($\omega_z$) um seine Hochachse (Z) multiplizierten sin des Rollwinkels ($\gamma$) bildet.

Fig.1

Fig.2

Fig.3